# EUROPÄISCHE PATENTSCHRIFT

(11) **EP 2 675 547 B1**
(45) Veröffentlichungstag und Bekanntmachung des Hinweises auf die Patenterteilung: **10.05.2017**
(21) Anmeldenummer: 12704784.3
(22) Anmeldetag: 16.02.2012
(51) Int. Cl.: B01D 45/12, B01D 46/02, B01D 46/24, B01D 50/00, B01D 46/52

(54) **LUFTFILTERELEMENT, LUFTFILTERGEHÄUSE UND LUFTFILTERSYSTEM**
AIR FILTER ELEMENT, AIR FILTER HOUSING, AND AIR FILTER SYSTEM
ÉLÉMENT DE FILTRE À AIR, CARTER DE FILTRE À AIR ET SYSTÈME DE FILTRE À AIR

(30) Priorität: 17.02.2011 DE 102011011595
(43) Veröffentlichungstag der Anmeldung: 25.12.2013
(73) Patentinhaber: Mann + Hummel GmbH, 71638 Ludwigsburg (DE)
(72) Erfinder: MENSSEN, Jörg, 29348 Eschede (DE); BECKER, Stefan, 68305 Mannheim (DE); HILARIUS, Kai, 67346 Speyer (DE); RUHLAND, Klaus-Dieter, 67149 Meckenheim (DE)
(74) Vertreter: Seyboth, Matthias
(86) Internationale Anmeldenummer: PCT/EP2012/052697
(87) Internationale Veröffentlichungsnummer: WO 2012/110605

(56) Entgegenhaltungen:
- WO-A2-2009/106591
- DE-A1-102008 011 186
- DE-U1-202005 003 046
- FR-A1- 2 214 505
- GB-A- 2 017 529
- US-A- 5 306 321
- US-A1- 2007 062 887

## Beschreibung

### Technisches Gebiet

Die vorliegende Erfindung bezieht sich auf ein Luftfilterelement, insbesondere für einen mehrstufigen Luftfilter, welcher einen Zyklonvorabscheider umfasst.

### Stand der Technik

Zyklonfilter, auch Fliehkraftabscheider, Zyklon oder Zyklonabscheider genannt, dienen zur Absonderung von in Gasen enthaltenen festen oder flüssigen Partikeln.

Im Zyklonfilter werden die Gase mit den Partikeln durch eine entsprechende konstruktive Gestaltung in eine Drehbewegung versetzt. Die auf die Partikel wirkenden Zentrifugalkräfte beschleunigen diese radial nach außen. Sie werden dadurch vom Gasstrom getrennt, der nach innen geleitet und abgeführt wird.

Wegen der im Vergleich zu anderen Verfahren nur mäßigen Filterleistung bei feinsten Partikeln wird die Zyklonfilterung oft als Teil einer Filterkette in einem mehrstufigen Filtersystem eingesetzt. Zur Abscheidung von Feinstäuben ist es daher Stand der Technik den Zyklonfilter zusätzlich mit einem konventionellen Filterelement zu versehen. Die durch die Zyklonfilterung vorgereinigte Luft wird durch das Filtermedium des Endfilters, insbesondere eines Filterelements, gefördert, wobei sich Verunreinigungen der Luft am Filtermedium ablagern. Auf diese Weise kann die Filterleistung des Zyklonfilters gesteigert werden.

Die Filterelemente des Standes der Technik sind oft unzureichend an die speziellen Anforderungen für den Einsatz als Hauptfilterelement in einer der Zyklonfilterung nachgeschalteten Luftfilterung in einem Luftfilter angepasst. Insbesondere liegt ein Problem darin, dass die Luft nach der Zyklonfilterung verwirbelt ist. Dadurch wird das Filtermedium des Endfilters ungleichmäßig durchströmt, was die Filterwirkung mindert.

Ferner sind konventionelle Filterelemente des Standes der Technik verbreitet mit Filtermedien mit Querschnitten in ebener, runder oder ovaler Form ausgestattet. Dadurch ist die zur Verfügung stehende Filteroberfläche des Filtermediums nicht optimal, da eine möglichst große Filteroberfläche vorteilhaft ist.

### Offenbarung der Erfindung

Es ist daher Aufgabe der vorliegenden Erfindung ein verbessertes Filterelement und ein Filtersystem, insbesondere für einen Luftfilter, zur Verfügung zu stellen, das es ermöglicht, die Luft im Filterelement in ihrer Strömung zu beruhigen und insbesondere Verwirbelungen zu mindern. Das Filterelement soll ferner bei geringem Bauraum und einfachem Aufbau eine große Filteroberfläche zur Verfügung stellen.

Diese Aufgabe wird durch ein Filterelement mit den Merkmalen des Patentanspruchs 1 gelöst.

Demgemäß weist ein Filterelement für einen Luftfilter ein schlauchförmiges Filtermedium auf, dessen ringförmiger Querschnitt einen Filterelementinnenraum umschließt und das eine an den Filterelementinnenraum angrenzende Innenwand aufweist, die in Form von (jeweils von außen auf das Filterelement gesehen) wenigstens zwei konvexen Bögen und wenigstens einem konkaven Bogen verläuft, wobei zwischen zwei konvexen Bögen ein konkaver Bogen angeordnet ist, so dass sich im Bereich der konkaven Bögen eine Einschnürung des Filterelementinnenraums ergibt, an die sich zwei weite Innenraumbereiche des Filterelements anschließen.

Durch die Form des Filterelements lässt sich eine besonders große Filterfläche erzielen. Konventionelle Filterelemente umfassen meist ausschließlich konvexe Bögen, beispielsweise als kreisrunde Endlosbalge.

Bevorzugt ist das Filterelement geeignet, mit einem Zyklonfilter zusammenzuwirken. Zum Beispiel kann das Filterelement in einem Zweistufenfilter als Feinfilterstufe oder Hauptfilterstufe eingesetzt werden.

Zum Beispiel sind genau zwei konvexe und zwei konkave Bögen vorgesehen. Diese schließen vorzugsweise jeweils unmittelbar aneinander an. Durch die wellenartige Ausgestaltung der Innenwand, die an den Filterelementinnenraum angrenzt, ist eine größere Innenwandfläche verfügbar, als bei einem einfachen, z. B. durchgehend runden Querschnitt des Filterelements. Dadurch steht eine größere Fläche für den Luftdurchtritt und das Abscheiden von Partikeln zur Verfügung, was die Filterleistung erhöht. Ferner bieten die weiten Bereiche den Vorteil, als Platz für das Einbringen von Luftleitfinnen, auch Schwerter genannt, genutzt werden zu können. Die zu reinigende Luft kann mittels Luftleitfinnen für die Nachfilterung im Filter in einen definierten Strömungszustand gebracht werden. Dadurch kann der Partikelaustrag bei der Filterung gesteigert werden. Es besteht hierbei zum einen eine Wechselwirkung zwischen der Form des Filters und den darin eingesetzten Luftleitfinnen, zum anderen ist ausreichend Platz für die Luftleitfinnen im Filter erforderlich. Dadurch kann die Strömungssituation im Filterelementinnenraum eingestellt werden und es können beispielsweise Verwirbelungen beruhigt werden. Ferner werden Verwirbelungen im Filterelementinnenraum auch durch die in Richtung auf das Innere des Filterelementinnenraums zu gewölbten Bögen in den konkaven Abschnitten beruhigt, da diese einen Strömungswiderstand bilden und der durchströmbare Querschnitt des Innenraums im Bereich der dieser Bögen geringer ist. In einer Ausführungsform sind die Luftleitfinnen an einem Gehäusedeckel oder einem Zyklonblock angeordnet und ragen in den Filterelementinnenraum ein, insbesondere in die weiten Bereiche des Filterelementinnenraums.

Außerdem können Strömungsstabilisierungselemente vorgesehen sein, welche von einem Gehäuse, insbesondere von der Gehäusewand, in Richtung zu einem konkaven Bogen des Filterelements verlaufen und in dem zwischen der Gehäusewand und einem Bereich des Filterelements mit einem konkaven Bogen befindlichen Zwischenraum angeordnet sind, wenn das Filterelement in das Gehäuse eingebaut ist. Die Strömungsstabilisierungselemente sind in einer Ausführungsform als Rippen an dem Filtergehäuse ausgebildet, die von der Innenwand des Filtergehäuses abstehen und sich entlang der auf das gesamte Filtersystem bezogenen Hauptströmungsrichtung zwischen Einlass und Auslass erstrecken. Diese Richtung kann insbesondere auch z. B. Einbaurichtung des Filterelements und parallel zu den Hauptachsen der kreis- oder ellipsenförmig gebogenen Bereiche des Gehäuses oder des Filterelements oder parallel zu dem Faltkanten eines Filterelements mit einem Filterbalg aus einem zickzackförmig gefalteten, ringförmig geschlossenen Filterbalg sein.

Gemäß einer bevorzugten Ausführungsform weist das Filterelement eine Endscheibe auf, die dicht am ringförmigen Querschnitt anliegt, und eine Öffnung aufweist, die in den Filterelementinnenraum mündet. Die Endscheibe ermöglicht es, das Filterelement dicht am Gehäuse des Luftfilters anzubringen. Dazu ist die Endscheibe bevorzugt aus einem formstabilen Kunststoff, beispielsweise Polyamid oder Polypropylen hergestellt.

Bevorzugt weist die Endscheibe eine umlaufende ebene Fläche zum Anliegen einer z. B. gehäuseseitigen Dichtung oder mit einer in der Endscheibe integrierten oder aufgebrachten Dichtung auf. Bevorzugt ist die Dichtung aus einem elastischen Dichtmaterial ausgebildet. Weiter bevorzugt weist die Dichtung eine umlaufende Nut auf, in welche eine insbesondere gehäuseseitige umlaufende Feder dichtend eingreift. Auf diese Weise kann eine reproduzierbare, genaue Positionierung des Filterelements im Gehäuse erreicht werden. Damit können Schwankungen und filterelementabhängige Fehler im Signal eines dem Filtersystem nachgeschalteten Luftmassenmessers minimiert werden.

Bevorzugt sind auch Befestigungselemente, z. B. Rastelemente, an der Endscheibe zum Befestigen des Filterelementes am Luftfilterfiltergehäuse vorgesehen. Dies ermöglicht es, das Filterelement mit dem eher weichen schlauchförmigen Filtermedium am Luftfiltergehäuse zu befestigen. Der Luftfilter ist insbesondere einstufiger Filter, bei welchem nur ein Filterelement die Filtration bewirkt oder als zwei- oder mehrstufiger Filter mit einem Zyklonfilterabschnitt und einem Filterabschnitt für das Filterelement ausgeführt.

Vorteilhaft weist das Filterelement an der Außenseite und/oder der Innenseite insbesondere korbähnliche Verstärkungsrippen zur Formstabilisierung des schlauchförmigen Filtermediums auf. Die Verstärkungsrippen ermöglichen es, das schlauchförmige Filtermedium in einer gewünschten Form zu halten. Dazu sind die Verstärkungsrippen besonders bevorzugt aus einem formstabilen Kunststoff, beispielsweise Polyamid oder Polypropylen oder aus Metall hergestellt.

Gemäß einer Ausführungsform ist das schlauchförmige Filtermedium zumindest teilweise aus einem porösen Material, insbesondere aus Papier oder Vlies gebildet. Papiere und Vliese ermöglichen es, auch feine Partikel, z. B. Feinstaub, wie sie in der Luft nach einer Zyklonreinigung enthalten sein können, aus der (vorgefilterten) Luft herauszufiltern. Dadurch kann zusammen mit der Zyklonreinigung eine wartungsarme Filterung erzielt werden, die deutlich mehr Partikel herausfiltert, als eine alleinige Zyklonreinigung bei gleichem technischem Aufwand.

Gemäß einer bevorzugten Ausführungsform weist der ringförmige Querschnitt des schlauchförmigen Filtermediums eine Vielzahl von Faltungen oder Vorsprüngen auf, die in den Filterelementinnenraum ragen. Beispielsweise kann durch eine zickzackförmige Faltung ein Endlosfaltenbalg geschaffen werden. Dadurch kann die wirksame Filteroberfläche des schlauchförmigen Filtermediums weiter gesteigert werden. Dies bietet den Vorteil, dass sich auf der Filterelementoberfläche abgelagerte Partikel auf einer größeren Oberfläche verteilen und sich das Filterelement dadurch nicht so schnell zusetzt.

Gemäß einer bevorzugten Ausführungsform ist das schlauchförmige Filtermedium mehrschichtig ausgebildet und die Falten oder Vorsprünge sind an einer Schicht angeordnet, die an den Filterelementinnenraum angrenzt.

Gemäß einer besonderen Ausführungsform weist das schlauchförmige Filtermedium eine im Wesentlichen über seinen Umfang konstante Materialstärke auf. Bei dieser Ausgestaltung kann einfaches bandförmiges und gefaltetes Filtermaterial für das schlauchförmige Filtermedium verwendet werden, was eine besonders kostengünstige Herstellung erlaubt.

Gemäß einer bevorzugten Ausführungsform weist das Filtergehäuse innere Rippen auf, die sich in der Aufnahmerichtung oder Einbaurichtung des Filterelements längs des Filterelements erstrecken. Die Rippen verlaufen insbesondere parallel zu den Falten des Filterelements, falls dieses aus einem sternförmig gefalteten, ringförmig geschlossenen Filterbalg gebildet ist. Diese Rippen verlaufen bevorzugt in der Aufnahmerichtung des Filterelements. Ein aufgenommenes Filterelement erstreckt sich dann an die Rippen angrenzend. Beispielsweise bildet die Gesamtheit der nach innen reichenden Rippen zumindest teilweise eine äußere Querschnittskontur des Filterelements nach. Durch die Rippen wird vermieden, dass ein ungeeignetes Filtermedium verwendet wird, das es erfordert, dicht am Filtergehäuse innenseitig anzuliegen. So kann sichergestellt werden, dass beim Einsatz von Ersatzfilterelementen der Anströmraum in der bevorzugten Größe beibehalten wird.

Gemäß einer bevorzugten Ausführungsform weist das Filtergehäuse eine ovale innere Gehäusequerschnittsform auf. Das Filterelement kann dabei eine ovale, jedoch auch eine nieren- oder achtförmige Querschnittsform haben. Das Verwenden nicht auf die Anwendung abgestimmter Filterelemente kann dadurch insbesondere erschwert werden.

Gemäß einer bevorzugten Ausführungsform ist zwischen Filtergehäuse und Filterelement eine Dichtplatte angeordnet. Diese weist bevorzugt Vorsprünge auf, die in Vertiefungen am Filtergehäuse oder in die Löcher eingreifen. Durch diese Maßnahme wird eine richtige Lageorientierung der Dichtplatte erzwungen, um eine sichere Abdichtung von Filtergehäuse und Filterelement zu erzielen. Die Dichtplatte ist zum Beispiel Teil des Filterelements. Sie ist bevorzugt an einer Endscheibe oder Endplatte des Filterelements angeordnet oder als diese ausgebildet. Die Form der Dichtplatte ist vorzugsweise an die Form der beiden aneinander liegenden Gehäuseteile, also dem Filtergehäuse und dem Sekundärgehäuse, angepasst. Die Dichtplatte ist bevorzugt mit einer ringförmigen Dichtung versehen, die mit einem korrespondierenden Dichtbereich des Filtergehäuses dichtend in Eingriff bringbar ist. Bevorzugt ist die Dichtplatte und die zugehörige Dichtfläche des Filtergehäuses an einer Schmalseite im Wesentlichen rechteckig (die Winkel können dabei abgerundet sein) und an der anderen Schmalseite in Form eines Halbkreises oder einer halben Ellipse ausgestaltet. Dadurch kann ein lagerichtiger Einbau des Filterelements gesichert werden. Bevorzugt verläuft die ringförmige Dichtung zur Abdichtung des Filterelements im Filtergehäuse entlang dieser Form. Dies ist insbesondere für ein genaues Signal des Luftmassenmessers vorteilhaft, da so sichergestellt werden kann, dass Unregelmäßigkeiten im Filterelementaufbau immer an der gleichen Stelle im Gehäuse angeordnet werden. Solch eine Unregelmäßigkeit kann z. B. die Verbindungsstelle eines ringförmig geschlossenen Faltenfilterbalgs sein.

In einer Ausführungsform sind im Filtergehäuse sind innere Rippen vorgesehen. Diese Rippen verlaufen in der Aufnahmerichtung des Filterelements und reichen nach innen in den Innenraum. Ein aufgenommenes Filterelement erstreckt sich dann bevorzugt an die Rippen angrenzend. Die Rippen bilden dabei zumindest grob eine Querschnittskontur des jeweils einzusetzenden Filterelements nach, insbesondere eine Querschnittsverjüngung z. B. in einem Bereich des Filterelements mit einem konkaven Bogen. Durch die Rippen wird vermieden, dass ein Filterelement mit einer nicht bestimmungsgemäßen Form eingesetzt werden kann. So kann sichergestellt werden, dass beim Einsatz von Ersatzfilterelementen der Anströmraum in der bevorzugten Größe beibehalten wird. Die Rippen können abströmseitig des Filterelements ferner zur Vergleichmäßigung der Strömung dienen und können dabei insbesondere vorteilhaft mit Luftleitfinnen zusammenwirken, die reinseitig in den Filterelementinnenraum des Filterelements zur Vergleichmäßigung und/oder Beruhigung der Strömung hineinragen.

In einer bevorzugten Ausführungsform ist das Filterelement mit zwei konvexen Bögen und zwei dazwischenliegenden konkaven Bögen ausgebildet, wodurch ein mittlerer Filterinnenraumbereich mit einer Einschnürung und jeweils zwei angrenzende, weitere Filterinnenraumbereiche gebildet werden. In die weiteren Filterinnenraumbereiche können Luftleitfinnen oder -schwerter, z. B. zur Strömungsberuhigung der in den Innenraum des Filterelements einströmenden Luft, insbesondere nach einem Zyklonvorabscheider eingreifen oder eintauchen. Die konkaven Bögen können Raum für Gehäuseseitige Rippen schaffen. So ist es zum Beispiel vorteilhaft, dass ein ovales Gehäuse verwendet wird, von welchem im Bereich der konkaven Bögen jeweils eine oder mehrere Rippen in den Innenraum des Gehäuses in Richtung des Filterelements abstehen. Diese erstrecken sich vorteilhaft entlang der Einbaurichtung und/oder parallel zu den Falten des Filterelements in den durch den konkaven Bogen des Filterelements gebildeten Raum zwischen Gehäusewand und Filterelement. Bevorzugt ist für jeden konkaven Bogen eine Rippe vorgesehen, die insbesondere in der Mitte des konkaven Bogens bevorzugt an der engsten Stelle des konkaven Bogens bzw. der Einschnürung angeordnet ist. Durch die Rippen kann abströmseitig an der Außenseite des Filterelements die Strömung vergleichmäßigt werden, was der Qualität des Signals des Luftmassenmessers zuträglich ist.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen. Der erfindungsgemäße Filter kann nicht nur zur Luftfiltration, sondern auch zur Filtration von Flüssigkeiten, insbesondere von Kraftstoff oder Schmieröl für eine Brennkraftmaschine verwendet werden.

Weitere Ausgestaltungen der Erfindung sind Gegenstand der Unteransprüche sowie der im Folgenden beschriebenen Ausführungsbeispiele der Erfindung. Im Weiteren wird die Erfindung anhand von Ausführungsbeispielen unter Bezugnahme auf die beigelegten Figuren näher erläutert.

### Kurze Beschreibung der Zeichnungen

Es zeigen dabei:
Fig. 1: eine schematische Explosionszeichnung eines zwei-stufigen Luftfilters;
Fig. 2: eine schematische perspektivische Ausschnittdarstellung eines Filterelementes gemäß einem ersten Ausführungsbeispiel;
Fig. 2A: eine Ausgestaltung eines Filterelements, wie es in Figur 2 gezeigt ist;
Fig. 3: eine schematische Querrschnittsdarstellung eines Filter-mediums eines Filterelementes gemäß dem ersten Ausführungsbeispiel;
Fig. 4: schematische Darstellungen eines Filtermediums gemäß weiterer Ausführungsformen;
Fig. 5: eine schematische perspektivische Explosionszeichnung eines Luftfilters mit einem Filtergehäuse und Filterelement gemäß einem ersten Ausführungsbeispiel;
Fig. 6: eine schematische perspektivische Darstellung des Luftfilters in zusammengebautem Zustand gemäß dem Ausführungsbeispiel der Figur 5;
Fig. 7 - 9: schematische perspektivische Ausschnittdarstellungen des Luftfilters gemäß dem Ausführungsbeispiel der Figur 5;
Fig. 10: eine perspektivische Darstellung eines Filtergehäuses;
Fig. 11 und 12: Draufsichten von Ausführungsbeispielen des Filtergehäuses und Filterelements.

In den Figuren bezeichnen dieselben Bezugszeichen gleiche oder funktionsgleiche Komponenten, soweit nichts Gegenteiliges angegeben ist.

### Ausführungsform(en) der Erfindung

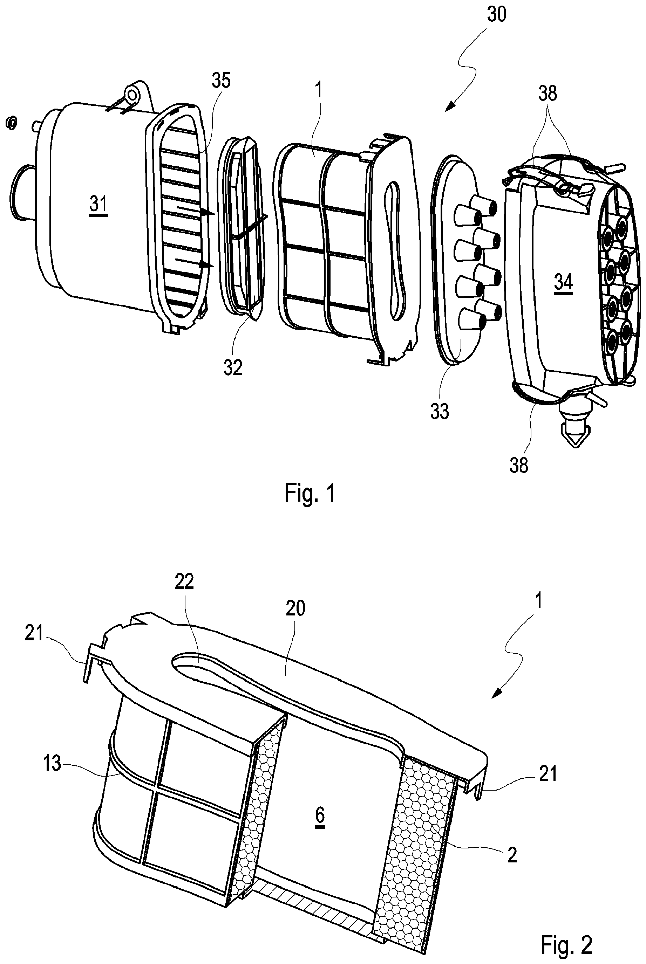

Figur 1 zeigt eine schematische Explosionszeichnung eines mehrstufigen Luftfilters bzw. eine Luftfilteranordnung 30. Die Zyklonfilterung wird durch eine Baugruppe bestehend aus einem Zyklon-Oberteil 34 und einem Zyklon-Unterteil 33 durchgeführt. Auf der Seite des Zyklon-Oberteils 34 wird Luft in die Luftfilteranordnung 30 eingeleitet. Die Luft wird dann durch das im Bild links von dem Zyklon-Unterteil 33 dargestellte Filterelement 1 geleitet, um eine weitere Ausfilterung von Partikeln, insbesondere von feinen Partikeln, durchzuführen. Es ist Fluidstrom abwärts ferner ein Sekundärelement 32 zur weiteren Filterung der durchströmenden Luft vorgesehen. Eine Durchströmung der Luftfilteranordnung 30 erfolgt durch den Zyklonabscheider 33, 34, das (Haupt-)Filterelement 1 und das Sekundärfilterelement 32. Eine Filteraufnahme für die Filterelemente 1, 32 und das Zyklonunterteil 33 ist aus einem Filtergehäuse 31 gebildet, welches mit dem Zyklonoberteil 34 abschließt. Das Zyklonoberteil 34 ist mit einem Verschlussdrahtbügel 38 an dem Gehäuseteil 31 befestigt. Bei diesem Ausführungsbeispiel ragen Strömungsstabilisierungselemente 35 vom Inneren des Gehäuses 31 in Richtung zu dem Filterelement 1 hinein. Die Strömungsstabilisierungselemente 35 sind am Gehäuse 31 vorgesehen, um den Strömungsverlauf der Luft im Filterelement 1 zu leiten und zu optimieren. Obgleich das Gehäuse 31 einen äußeren in etwa ovalen Querschnitt aufweist, erfordern die Strömungsstabilisierungselemente 35, dass das Filterelement 1 innen konvexe Bögen hat, welche in Richtung zu einem Filterelementinnenraum dasselbe einschnüren. Insbesondere die Kombination von der Gehäusegeometrie, welche die Einbausituation für das eingesetzte Filterelement 1 vorgibt, und die Form des Filterelements 1 erlauben eine effiziente Filterung von Luft für einen Verbrennungsmotor.

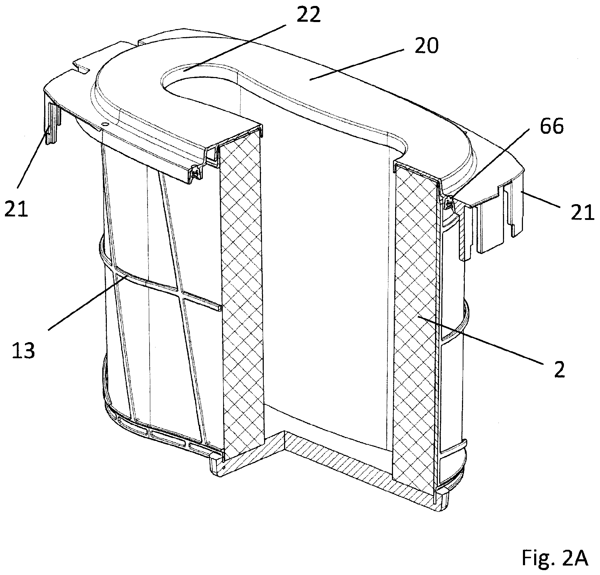

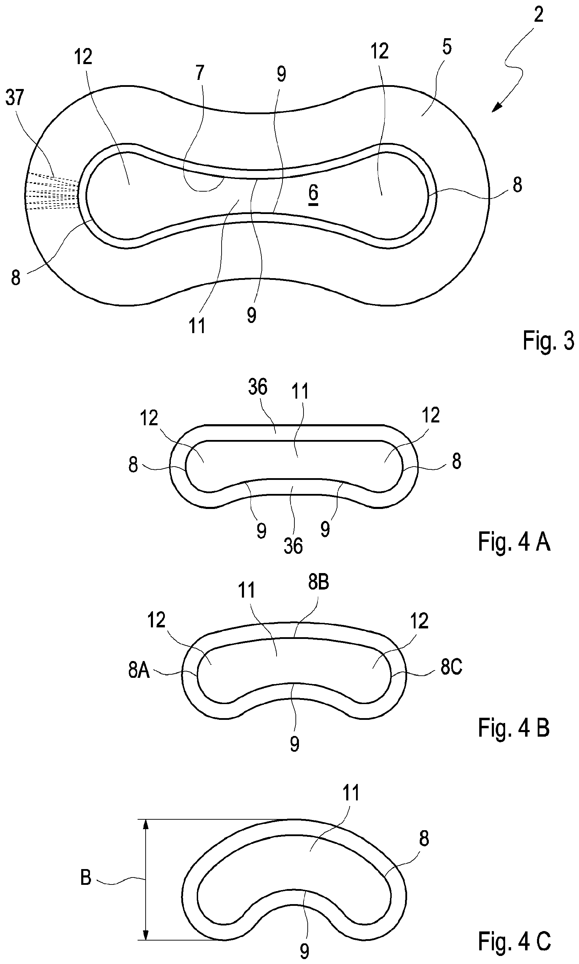

Figur 2 zeigt eine schematische perspektivische Ausschnittdarstellung eines Filterelementes 1 gemäß einem ersten Ausführungsbeispiel. Das Filterelement 1 entspricht dem, das in Figur 1 dargestellt ist. Das Filterelement 1 weist ein schlauchförmiges Filtermedium 2 auf, das bei diesem Ausführungsbeispiel aus einem Filterpapier gebildet ist. Das schlauchförmige Filtermedium 2 ist hier angeschnitten dargestellt. Das schlauchförmige Filtermedium 2 bildet bei diesem Ausführungsbeispiel entsprechend dem von Figur 3 einen geschlossenen Ringquerschnitt mit einem Filterelementinnenraum 6. Es ist, wie in Figur 3 angedeutet, möglich, das Filtermedium als zickzackförmig gefalteten Endlosfaltenbalg auszuführen. Man erkennt die Faltungen bzw. Faltungsprofile 37 zur Oberflächenvergrößerung des Filtermediums 2. Verstärkungsrippen 13 aus einem steifen Kunststoff sind an dem schlauchförmigen Filter 2 vorgesehen, um dessen Form zu stabilisieren. Eine Endscheibe 20 ist am Filterelement 1 stirnseitig vorgesehen, und liegt dicht am schlauchförmigen Filtermedium 2 an. Die Endscheibe 20 weist eine Öffnung 22 auf, die in den Filterelementinnenraum 6 mündet und als Eintrittsöffnung für die Luft dient. Die Endscheibe 20 weist ferner Befestigungselemente 21, bei diesem Ausführungsbeispiel Rastelemente, auf, die zur Befestigung des Filterelements 1 an einem entsprechenden Gegenstück des Gehäuses 31 dienen.

Figur 2A zeigt eine Ausgestaltung eines Filterelements, wie es in Figur 2 gezeigt ist. Gleiche Elemente und Merkmale sind mit gleichen Bezugszeichen versehen. An der Endscheibe 22, die an dem anströmseitigen Ende des Filterelements angeordnet ist, ist an deren abströmseitigen, d. h. in Einbaurichtung des Filterelements weisender Seite eine Dichtung 66 zur Abdichtung gegenüber dem Gehäuse angeordnet, wodurch die Rohseite von der Reinseite getrennt wird. Die Dichtung 66 ist mit einem korrespondierenden Dichtbereich des Filtergehäuses dichtend in Eingriff bringbar. Die Endscheibe 20 und die zugehörige Dichtfläche des Filtergehäuses können an einer Schmalseite im Wesentlichen rechteckig (die Winkel können dabei abgerundet sein) und an der anderen Schmalseite in Form eines Halbkreises oder einer halben Ellipse ausgestaltet sein. Dadurch kann ein lagerichtiger Einbau des Filterelements gesichert werden. Alternativ können wie hier dargestellt auch beide Schmalseiten symmetrisch in Form eines Halbkreises oder einer halben Ellipse ausgestaltet sein. Der lagerichtige Einbau kann dann zum Beispiel dadurch gesichert werden, dass die Befestigungselemente 21 und auch die zugehörigen gehäuseseitigen Öffnungen an den beiden Schmalseiten unterschiedlich, z. B. in unterschiedlicher Anzahl oder Position, ausgebildet sind. Dies ist insbesondere für ein genaues Signal des Luftmassenmessers vorteilhaft, da so sichergestellt werden kann, dass Unregelmäßigkeiten im Filterelementaufbau immer an der gleichen Stelle im Gehäuse angeordnet werden. Solch eine Unregelmäßigkeit kann z. B. die Verbindungsstelle eines ringförmig geschlossenen Faltenfilterbalgs sein.

Figur 3 zeigt eine schematische Querschnittsdarstellung eines Filtermediums 2 eines Filterelementes 1. Das Filtermedium 2 ist schlauchförmig mit einem ringförmigen Querschnitt 5, der einen Filterelementinnenraum 6 mit seiner Innenwand 7 umschließt. Es ist zum Bespiel ein entlang der Faltungen 37 gefaltetes flaches Filtermaterial 2 verwendet. Die Innenwand 7 verläuft in Form von zwei konvexen Bögen 8, zwischen denen zwei konkave Bögen 9 angeordnet sind. Es wechseln sich somit konvexe Bögen 8 mit konkaven Bögen 9 ab. Im Bereich der konkaven Bögen 9 nähern sich die gegenüberliegenden Innenwände 7 somit an, so dass sich eine Einschnürung 11 des Filterelementinnenraums 6 ergibt. An die Einschnürung grenzen zwei weite Filterelementinnenraumbereiche 12 mit größerem Querschnitt des Filterelementinnenraums an.

Die Figur 4 zeigt weitere mögliche Geometrien von Filtermedien in der Draufsicht. Beispielsweise hat das in Figur 4A dargestellte Filtermedium neben zwei geraden Abschnitten 36, zwei konkave Bögen 9 und zwei konvexe Bögen 8. Die konvexen Bögen 8 bilden Kreisabschnitte aus, die weite Filterelementinnenraumbereiche 12 teilweise umschließen. Eine Einschnürung 11 ergibt sich zwischen den weiten Bereichen 12. Bei dem in Figur 4B gezeigten Filterelement ist ein konkaver Bogen 9 und ein konvexer Bogen 8, welcher Unterabschnitte oder -bögen 8A, 8B, 8C umfasst, die jeweils verschiedene Krümmungen haben, dargestellt.

Eine weitere denkbare geometrische Ausgestaltung ist in Figur 4C dargestellt. Dabei ist ein konkaver Bogen 9 und ein konvexer Bogen 8 vorgesehen, wobei die Einschnürung 11 bezüglich einer Gesamtbreite B des Filterelements vorliegt. Die Ausführungsform der Figur 4C hat einen bohnenförmigen Querschnitt. Man kann auch von einem nieren- oder gurkenförmigen Querschnitt sprechen. Insofern bedeutet insbesondere in Bezug auf die Darstellung der Figur 4C eine Einschnürung einen Bereich des Filterelements dessen Breite geringer ist als die maximale Breitenausdehnung des Filterelements.

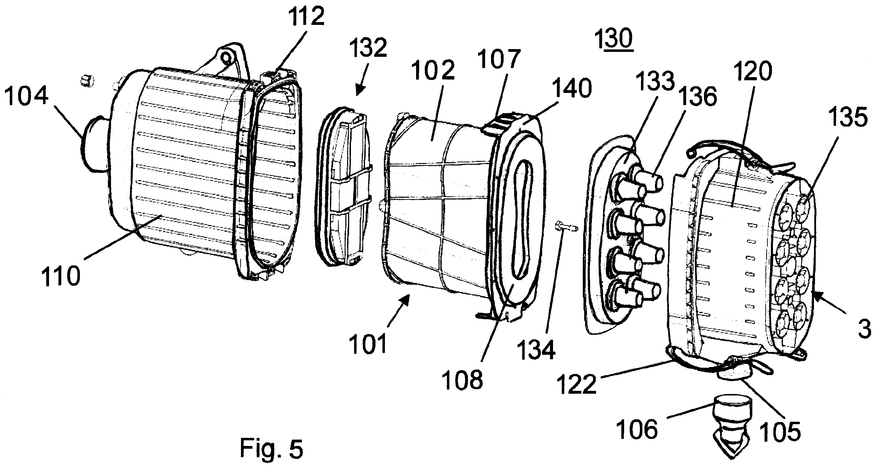

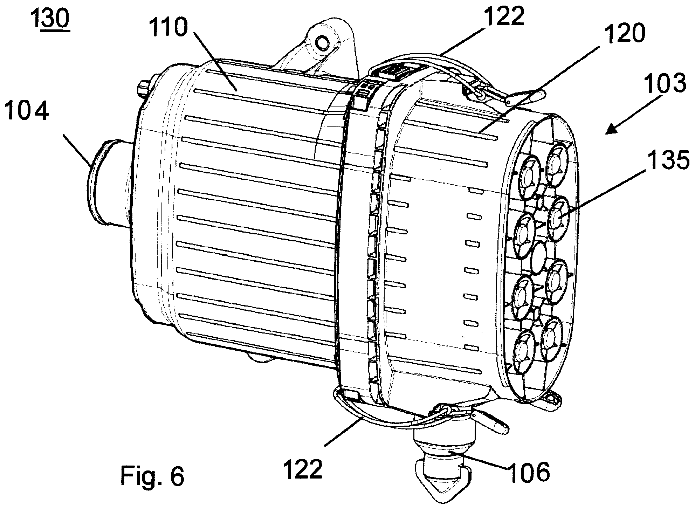

Figur 5 zeigt eine schematische perspektivische Explosionszeichnung eines Luftfilters 130 mit einem Filtergehäuse 110 und Filterelement 101 gemäß einem ersten Ausführungsbeispiel. Die Figur 6 zeigt den Luftfilter 130 in zusammengebautem Zustand. In der Orientierung der Figuren 5 und 6 strömt zu reinigende Luft von rechts zu einem Einlass 103, durchläuft die mehrstufige Filterkette, welche als Luftfilter 130 bezeichnet ist, und tritt an einem Auslass 104 links gereinigt aus. Die Zyklonabscheidung wird durch eine Baugruppe bestehend aus einem Zyklon-Oberteil, das im Folgenden als Sekundärgehäuse 120 bezeichnet wird und einem Zyklon-Unterteil 133 durchgeführt. Man erkennt am Zyklonunterteil 133 mehrere Tauchrohre 136, welche mit einzelnen Fliehkraftabscheidern 135 am Sekundärgehäuse 120 zusammen wirken. Das Zyklonunterteil 133 wird mit Hilfe eines Befestigungselements, beispielsweise einer Schraube 134, am Zyklonoberteil bzw. Sekundärgehäuse 120 gehalten. Als Sekundärgehäuse 120 kommen auch in Frage: Abdeckscheiben, Ansauggitter und/oder Gehäusedeckel, insbesondere mit Ein- oder Auslässen.

Auf der Seite des Zyklon-Oberteils 120 wird Rohluft am Einlass 103 in den Luftfilter 130 eingeleitet. Durch die Zyklonabscheidung werden grobe Partikel aus der Luft entfernt und im unteren Teil des Sekundärgehäuses 120 gesammelt. Es ist eine Partikelaustragsöffnung 105 vorgesehen, die mit einem Ventil 106 verschlossen ist. In vorgegebenen Wartungsintervallen können die akkumulierten Partikel entfernt werden, das Ventil kann aber auch manuell geöffnet werden.

Die Luft wird dann durch das im Bild links von dem Zyklon-Unterteil 133 dargestellte Filtermedium 102 des Filterelements 101 geleitet, um eine weitere Ausfilterung von Partikeln, insbesondere von feinen Partikeln, durchzuführen. Es ist stromabwärts ein weiteres Filterelement als Sekundärelement 132 vorgesehen. Mit Hilfe des Sekundärelements 132 wird die Luft zusätzlich gefiltert und tritt am Auslass 104 des Filtergehäuses 110 als gefilterte Luft aus.

Das Filterelement 101 weist kopfseitig eine dichtende Endscheibe 108 auf, welche mehrere Befestigungselemente 107 in Form von Vorsprüngen oder Laschen hat. Im Filtergehäuse 110 sind Öffnungen oder Löcher 112 angeordnet, in die die Vorsprünge 107 eingreifen können. Wenn das Filterelement 101 in das Filtergehäuse 110 aufgenommen ist, das heißt wenn diese in Figur 5 in im Wesentlichen horizontaler Richtung vollständig ineinander geschoben sind, greifen die Vorsprünge 107 in die Löcher 112 ein. Die Vorsprünge 107 sind dabei im Bereich der Löcher 112 so lang, dass sie in der Orientierung der Figur 5 im Bild links aus den Löchern 112 des Filtergehäuses 110 ragen. Die Öffnungen 112 sind außerhalb des Filtergehäuses 110 vorgesehen und schaffen keinen Zugang zum Innenraum des Luftfilters 130. Das Filterelement 101 ist dabei insbesondere mit seiner Endscheibe 108 zwischen dem Filtergehäuse 110 und dem Sekundärgehäuse 120 angeordnet.

Arretierungselemente 122, die bei diesem Ausführungsbeispiel in Form von Drahtbügeln am Sekundärgehäuse 120 angebracht sind, können dann in die Vorsprünge 107, dort wo diese aus dem Filtergehäuse 110 ragen, greifen, so dass dann das Filterelement 101 zwischen dem Sekundärgehäuses 120 und dem Filtergehäuse 110 verspannbar ist.

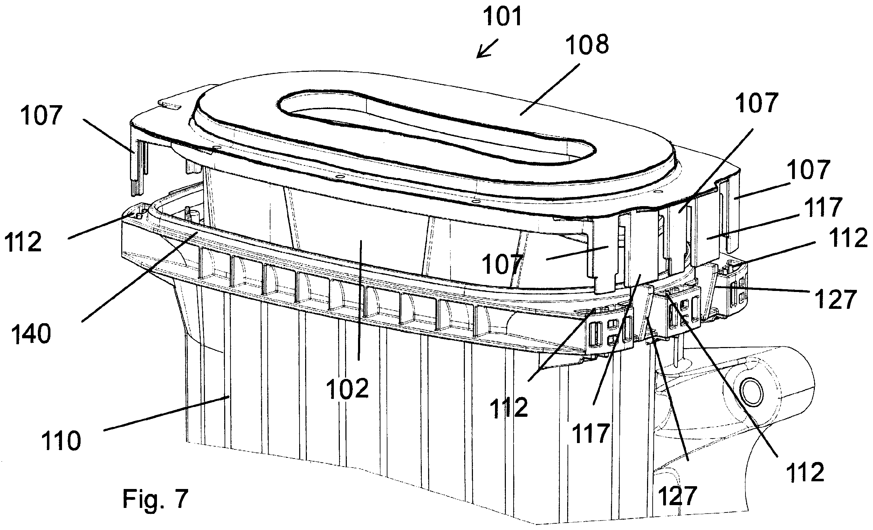

Die Figuren 7 - 9 zeigen schematische perspektivische Ausschnittdarstellungen eines Filtergehäuses 110 und Sekundärgehäuses 120 mit aufgenommenem Filterelement 101 gemäß dem Ausführungsbeispiel aus Figur 5. In der Orientierung der Figuren 7 - 9 oben ist das Sekundärgehäuse 120 mit den (verdeckten) Zyklonabscheidem und darunter das Filtergehäuse 110 dargestellt. Zwischen dem Sekundärgehäuse 120 und Filtergehäuse 110 liegen das Zyklonunterteil 133 und die Endplatte 108 des Filterelements 101 vor. Vom Filterelement 101 bzw. der Endplatte 108 sind Vorsprünge 107 zu erkennen, da das Filterelement 101 im Filtergehäuse 110 aufgenommen ist. In Figur 7 erkennt man, dass Vorsprünge 107 einerseits zum Durchgreifen durch die Öffnungen 112 am Filtergehäuse 110 vorgesehen sind, und dass andererseits weitere Vorsprünge 117 vorgesehen sind. Die Vorsprünge 107 erstrecken sich durch die Öffnungen 112 im Filtergehäuse 110. Zu den weiteren Vorsprüngen 117 sind am Filtergehäuse 110 keine zugehörigen Öffnungen an der in der Orientierung der Figur 7 rechten Seite. Am Filtergehäuse 110 sind hingegen außenseitig Blockierrippen 127 vorgesehen, welche eine Bewegung des Filterelements 1 nach untern verhindern. Bei nicht bestimmungsgemäßer Einbauorientierung kann das Filterelement 101 somit nicht vollständig in das Gehäuse 110 aufgenommen werden. Dadurch wird gewährleistet, dass die dichtende Endscheibe 108 mit dem Rand 140 des Filtergehäuses 110 passgenau aufeinander liegt und fluiddicht abschließen kann.

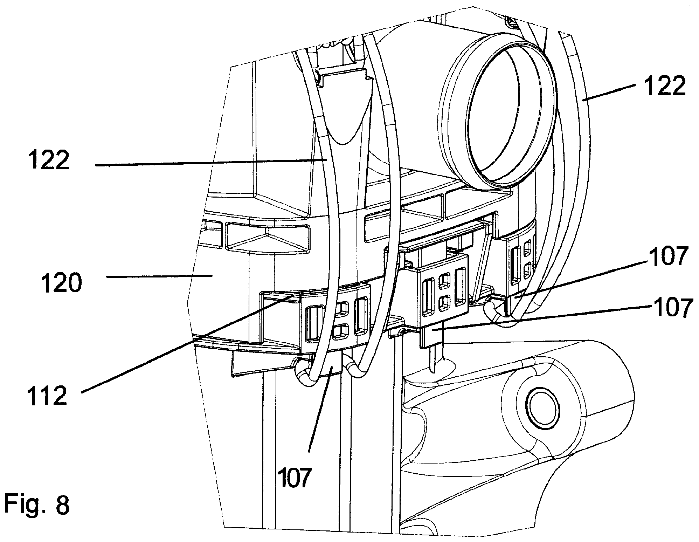

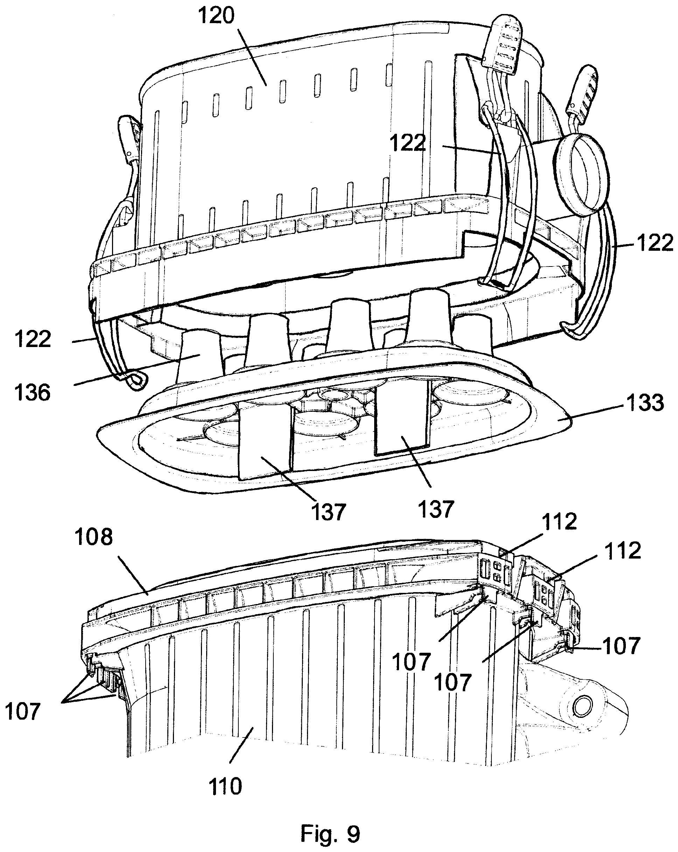

Die Figuren 8 und 9 zeigen den bestimmungsgemäßen Zusammenbau von Filterelement 101 und den Gehäuseteilen 110, 120. Das am Sekundärgehäuse 120 angebrachte Arretierungselement 122, das bei diesem Ausführungsbeispiel als Drahtklammer oder Bügel realisiert ist, verspannt das Sekundärgehäuse 120 und insbesondere das Zyklonunterteil 133 gegen das Filtergehäuse 110 mit dem dazwischen liegenden Filterelement 101. Ein Abrutschen des Arretierungselements 122 am Filtergehäuse 110 wird verhindert, indem das Arretierungselement hinter den jeweiligen Vorsprung 107 greifen und daran halten kann. Somit ermöglicht der jeweilige Vorsprung 107, der am Filterelement 101 vorgesehen ist, in Zusammenwirken mit den Öffnungen 112, dass mittels der Arretierungselemente 122 das Sekundärgehäuse 120 mit dem Filtergehäuse 110 verspannt werden kann. Werden herstellerfremde Filterelemente 101 eingesetzt, die die Vorsprünge 107 nicht oder an einer anderen Position aufweisen, rutschen die Arretierungselemente 122 am Filtergehäuse ab, und die feste Verbindung von Sekundärgehäuse 120 und Filtergehäuse 110 ist verhindert. Dadurch kann der unsachgemäße Einsatz ungeeigneter Filterelemente 101 verhindert werden.

In der Figur 9 ist ferner dargestellt, dass an dem Zyklonunterteil 133 neben den Tauchrohren 136 zum Sekundärgehäuse 120 hin in Richtung zu dem Filterelement 101 zwei Schwerter 137 in den Innenraum ragen. Die Schwerter 137 sind derart ausgestaltet, dass sie bei passenden Filterelementen 101 genau in Zwischenräume im Filtermedium 102 eingreifen. Andernfalls blockiert ein falsches Filterelement den Zusammenbau des Luftfilters 130. Durch die Schwerter 137 kann die aus den Zyklonen austretende Luft auf dem Weg zum Filterelement 101 beruhigt werden, wodurch eine gleichmäßigere Anströmung des Filterelements erreicht werden kann.

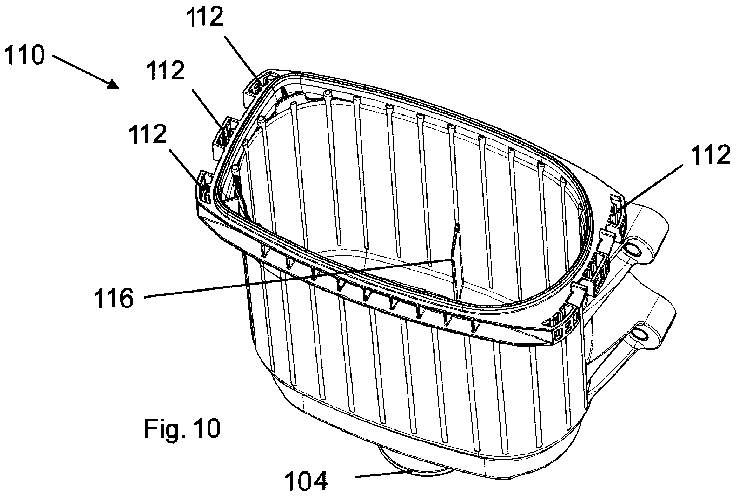

Die Figur 10 zeigt eine perspektivische Ansicht des Filtergehäuses 110 mit Sicht in den Innenraum. Am Filtergehäuse 110 sind innere Rippen 116 vorgesehen. Diese Rippen 116 verlaufen in der Aufnahmerichtung des Filterelements 101 und reichen nach innen in den Innenraum. Ein aufgenommenes Filterelement 101 erstreckt sich dann an die Rippen 116 angrenzend. Die Rippen 116 bilden eine Querschnittskontur des jeweils einzusetzenden Filterelements nach. Durch die Rippen 116 wird vermieden, dass ein Filterelement mit einer nicht bestimmungsgemäßen Form eingesetzt werden kann. So kann sichergestellt werden, dass beim Einsatz von Ersatzfilterelementen der Anströmraum in der bevorzugten Größe beibehalten wird. Die Rippen 116 können abströmseitig des Filterelements ferner zur Vergleichmäßigung der Strömung dienen und können dabei insbesondere vorteilhaft mit den Schwertern 137 zusammenwirken.

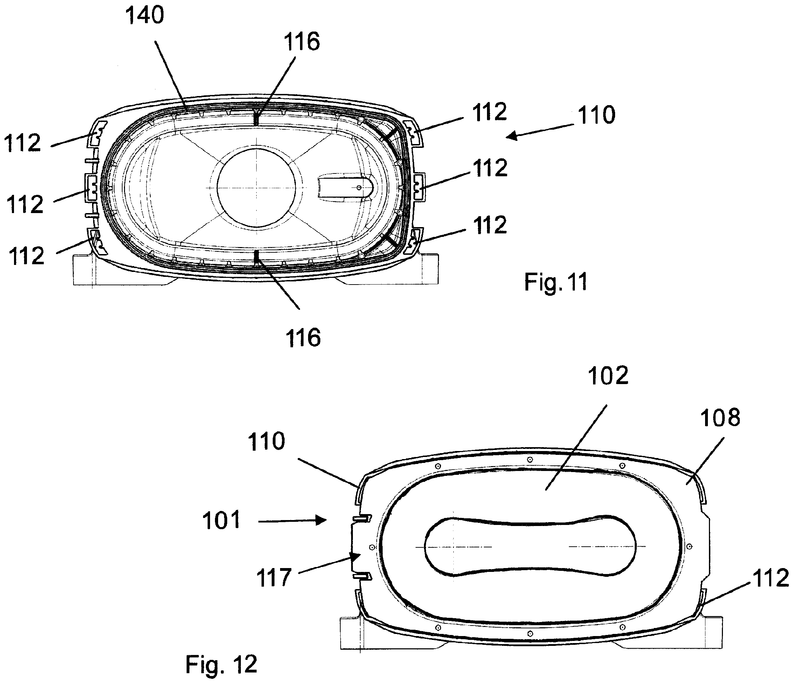

In der Figur 11 ist das Filtergehäuse 110 in der Draufsicht dargestellt, und in der Figur 12 ein geeignetes Filterelement 101, welches in das Filtergehäuse 110 eingesetzt ist. Die Rippen 116 und die Form des Filterelements 101 mit seinem Filtermedium 102 sind derart aneinander angepasst, dass in der Art eines Schlüssel-Schloss-Prinzips ausschließlich vorgesehene Filterelemente vollständig in das Filtergehäuse 110 aufgenommen werden können. In der Draufsicht erkennt man darüber hinaus, dass nur bei korrekter Orientierung des Filterelements 1 in Relation zu dem Filtergehäuse 110 der weitere Vorsprung 117 nicht von einem Blockierelement 127 (vgl. Figur 7) blockiert wird. Die Endscheibe 108 hat dabei eine an den dichtenden Rand 140 angepasste Form. Es ergibt sich damit zwangsläufig ein guter Dichtsitz.

Obwohl die vorliegende Erfindung anhand bevorzugter Ausführungsbeispiele vorliegend beschrieben wurde, ist sie darauf nicht beschränkt, sondern auf vielfältige Weise modifizierbar. Insbesondere können Filterelement und Gehäuse auch für andere Filtertypen als Zyklonfilter oder Betriebsmittel angepasst sein. Es ist auch denkbar, drei oder mehr als vier Laschen zum Verspannen der Gehäuseteile vorzusehen.

Obwohl die vorliegende Erfindung anhand bevorzugter Ausführungsbeispiele vorliegend beschrieben wurde, ist sie darauf nicht beschränkt, sondern auf vielfältige Weise modifizierbar.

## Patentansprüche

1. Luftfilter (30) mit einem Gehäuse (31) und einem in das Gehäuse aufgenommenen Filterelement (1, 101), wobei das
Luftfilterelement (1, 101) ein schlauchförmiges Filtermedium (2) aufweist, dessen ringförmiger Querschnitt (5) einen Filterelementinnenraum (6) umschließt und das eine an den Filterelementinnenraum angrenzende Innenwand (7) aufweist, die in Form von wenigstens zwei konvexen Bogen (8) und zwei konkaven Bögen (9) verläuft, wobei zwischen zwei konvexen Bögen (8) die konkaven Bögen (9) angeordnet sind, so dass sich im Bereich der konkaven Bögen (9) eine Einschnürung (11) des Filterelementinnenraums (6) ergibt, an die sich zwei weite Filterelementinnenraumbereiche (12) anschließen, und wobei das Luftfiltergehäuse (31) zur inneren Aufnahme des Filterelements (1, 101) ausgebildet ist und Strömungsstabilisierungselemente (116) aufweist, die von der Gehäusewand in Richtung zu einem konkaven Bogen (9) des Filterelements (1) ragen, und in dem zwischen der Gehäusewand und einem Bereich des Filterelements mit einem konkaven Bogen befindlichen Zwischenraum angeordnet sind, wenn das Filterelement in das Gehäuse eingebaut ist.

2. Luftfilter nach Anspruch 1, wobei die Strömungsstabilisierungselemente als Rippen an dem Filtergehäuse ausgebildet sind, die von der Innenwand des Filtergehäuses abstehen und sich entlang der auf das gesamte Filtersystem bezogenen Hauptströmungsrichtung zwischen Einlass und Auslass erstrecken.

3. Luftfilter (30) nach Anspruch 1 oder 2, wobei das Filterelement (1) eine Endscheibe (20) aufweist, die dicht am ringförmigen Querschnitt (5) anliegt, und eine Öffnung (22) aufweist, die in den Filterelementinnenraum (6) mündet.

4. Luftfilter (30) nach Anspruch 1, 2 oder 3, wobei die Endscheibe (20) Befestigungselemente (21), insbesondere Rastelemente, zum Befestigen des Filterelementes (1) an einem Luftfiltergehäuseteil (31) aufweist.

5. Luftfilter (30) nach einem der vorhergehenden Ansprüche, wobei das Filterelement (1) Verstärkungsrippen (13) zur Formstabilisierung des schlauchförmigen Filtermediums (2) aufweist.

6. Luftfilter (30) nach einem der vorhergehenden Ansprüche, wobei das schlauchförmige Filtermedium (2) zumindest teilweise aus Papier oder Vlies, insbesondere mehrlagig, gebildet ist.

7. Luftfilter (30) nach einem der Ansprüche 1 bis 6, wobei der ringförmige Querschnitt (5) des schlauchförmigen Filtermediums (2) eine Vielzahl von Vorsprüngen oder Faltkanten (14), aufweist, die in den Filterelementinnenraum (6) ragen.

8. Luftfilter (30) nach Anspruch 7, wobei das schlauchförmige Filtermedium (2) mehrschichtig ausgebildet ist und die Vorsprünge oder Faltkanten (14) an einer Schicht (15) angeordnet sind, die an den Filterelementinnenraum (6) angrenzt.

9. Luftfilter (30) nach einem der Ansprüche 1 bis 6, wobei das schlauchförmige Filtermedium (2) eine im Wesentlichen über seinen Umfang konstante Materialstärke aufweist.

## Claims

1. Air filter (30) with a housing (31) and a filter element (1, 101) accommodated in the housing, wherein the
air filter element (1, 101) features a tubular filter medium (2), the annular cross section (5) of which encloses a filter element interior space (6) and which features, adjacent to the filter element interior space, an interior wall (7) which extends in the shape of at least two convex bends (8) and two concave bends (9), wherein the concave bends (9) are disposed between two convex bends (8) in such a way that in the area of the concave bends (9) a constriction (11) of the filter element interior space (6) is formed, to which two large filter element interior spaces (12) are connected, and wherein the air filter housing (31) is designed for an inner reception of the filter element (1, 101) and features flow stabilizing elements (116) which project from the housing wall in the direction of a concave bend (9) of the filter element (1) and which are disposed in the gap located between the housing wall and an area of the filter element with a concave bend when the filter element is mounted in the housing.

2. Air filter according to claim 1, wherein the flow stabilizing elements are designed as ribs at the filter housing, which protrude from the internal wall of the filter housing and extend along the main flow direction relative to the entire filter system between inlet and outlet.

3. Air filter (30) according to claim 1 or 2, wherein the filter element (1) features an end disk (20), which sealingly contacts the annular cross-section (5), and features an opening (22), which ends in the filter element interior space (6).

4. Air filter (30) according to claim 1, 2 or 3, wherein the end disk (20) features fastening elements (21), in particular locking elements, for attaching the filter element (1) to an air filter housing component (31).

5. Air filter (30) according to one of the above claims, wherein the filter element (1) features reinforcing ribs (13) for stabilizing the form of the tubular filter medium (2).

6. Air filter (30) according to one of the above claims, wherein the tubular filter medium (2) is at least partially made of paper or fleece, in particular in multilayer design.

7. Air filter (30) according to one of the claims 1 to 6, wherein the annular cross-section (5) of the tubular filter medium (2) features a plurality of protrusions or fold edges (14), which extend into the filter element interior space (6).

8. Air filter (30) according to claim 7, wherein the tubular filter medium (2) has a multilayer design and the protrusions or fold edges (14) are disposed on a layer (15) adjacent to the filter element interior space (6).

9. Air filter (30) according to one of the claims 1 to 6, wherein the tubular filter medium (2) features a material thickness essentially constant around its circumference.

## Revendications

1. Filtre à air (30) avec un boîtier (31) et un élément filtrant (1, 101) intégré dans le boîtier,
l'élément de filtre à air (1, 101) comportant un milieu filtrant (2) en forme de tuyau dont la section (5) annulaire entoure un espace intérieur de l'élément filtrant (6) et étant pourvu d'une paroi intérieure (7) adjacente à l'espace intérieur de l'élément filtrant, cette paroi évoluant sous la forme d'au moins deux arcs (8) convexes et d'au moins deux arcs (9) concaves, les arcs (9) concaves étant disposés entre deux arcs (8) convexes de sorte qu'il se forme dans la zone des arcs (9) concaves un rétrécissement (11) de l'espace intérieur de l'élément filtrant (6) à laquelle se raccordent deux larges zones d'espace intérieur de l'élément filtrant (12), et le boîtier de filtre à air (31) étant exécuté en tant que logement intérieur de l'élément filtrant (1, 101) et étant pourvu d'éléments de stabilisation d'écoulement (116) qui dépassent de la paroi du boîtier en direction d'un arc (9) concave de l'élément filtrant (1) et qui sont placés dans l'interstice ménagé entre la paroi du boîtier et une zone de l'élément filtrant avec un arc concave lorsque l'élément filtrant est monté dans le boîtier.

2. Filtre à air selon la revendication 1, les éléments de stabilisation d'écoulement étant exécutés en tant que membrures sur le boîtier de filtre qui dépassent de la paroi intérieure du boîtier de filtre et s'étendent le long du sens de flux principal, par rapport à l'ensemble du système de filtre, entre l'entrée et la sortie.

3. Filtre à air (30) selon la revendication 1 ou 2, l'élément filtrant (1) comportant un disque d'extrémité (20) qui est appliqué de manière étanche contre la section (5) annulaire, ainsi qu'une ouverture (22) qui débouche dans l'espace intérieur de l'élément filtrant (6).

4. Filtre à air (30) selon la revendication 1, 2 ou 3, le disque d'extrémité (20) étant doté d'éléments de fixation (21), en particulier d'éléments d'encliquetage, pour fixer l'élément filtrant (1) à un élément de boîtier de filtre à air (31).

5. Filtre à air (30) selon l'une des revendications précédentes, l'élément filtrant (1) étant muni de nervures de renfort (13) à des fins de stabilisation de forme du milieu filtrant (2) en forme de tuyau.

6. Filtre à air (30) selon l'une des revendications précédentes, le milieu filtrant (2) en forme de tuyau étant constitué, tout au moins en partie, de papier ou de non-tissé, en particulier en plusieurs couches.

7. Filtre à air (30) selon l'une des revendications 1 à 6, la section (5) annulaire du milieu filtrant (2) en forme de tuyau comportant plusieurs saillies ou bords de pliage (14) qui pénètrent dans l'espace intérieur de l'élément filtrant (6).

8. Filtre à air (30) selon la revendication 7, le milieu filtrant (2) en forme de tuyau étant constitué de plusieurs couches et les saillies ou bords de pliage (14) étant placés sur une couche (15) qui est adjacente à l'espace intérieur de l'élément filtrant (6).

9. Filtre à air (30) selon l'une des revendications 1 à 6, le milieu filtrant (2) en forme de tuyau présentant une épaisseur de matériau essentiellement constante sur tout son pourtour.
